## Europäisches Patentamt

## European Patent Office

## Office européen des brevets

(11) Numéro de publication: **0 192 534**
**B1**

# FASCICULE DE BREVET EUROPEEN

(45) Date de publication du fascicule du brevet:
**20.09.89**

(51) Int. Cl.⁴: **G21C 3/34**

(21) Numéro de dépôt: **86400214.2**

(22) Date de dépôt: **31.01.86**

(54) Dispositif d'espacement et de maintien de crayons combustibles dans un assemblage combustible.

(30) Priorité: **08.02.85 FR 8501795**

(43) Date de publication de la demande:
**27.08.86 Bulletin 86/35**

(45) Mention de la délivrance du brevet:
**20.09.89 Bulletin 89/38**

(84) Etats contractants désignés:
**BE DE GB IT SE**

(56) Documents cités:
**DE-A- 1 764 625**
**FR-A- 2 168 059**
**FR-A- 2 531 258**
**GB-A- 1 153 444**
**US-A- 3 350 276**
**US-A- 4 190 494**

(73) Titulaire: **COMMISSARIAT A L'ENERGIE ATOMIQUE,
31/33, rue de la Fédération, F-75015 Paris(FR)**

(72) Inventeur: **Manson, Marcel, 4, rue du Pommeret,
F-78230 Le Mesnil saint Denis(FR)**
Inventeur: **Razafindrazaka, Lioka, 7, Square Pascal,
F-78181 Montigny le Bretonneux(FR)**

(74) Mandataire: **Mongrédien, André et al, c/o
BREVATOME 25, rue de Ponthieu, F-75008 Paris(FR)**

ACTORUM AG

## Description

La présente invention a pour objet un dispositif d'espacement et de maintien de crayons combustibles dans un assemblage combustible de réacteur nucléaire à eau sous pression.

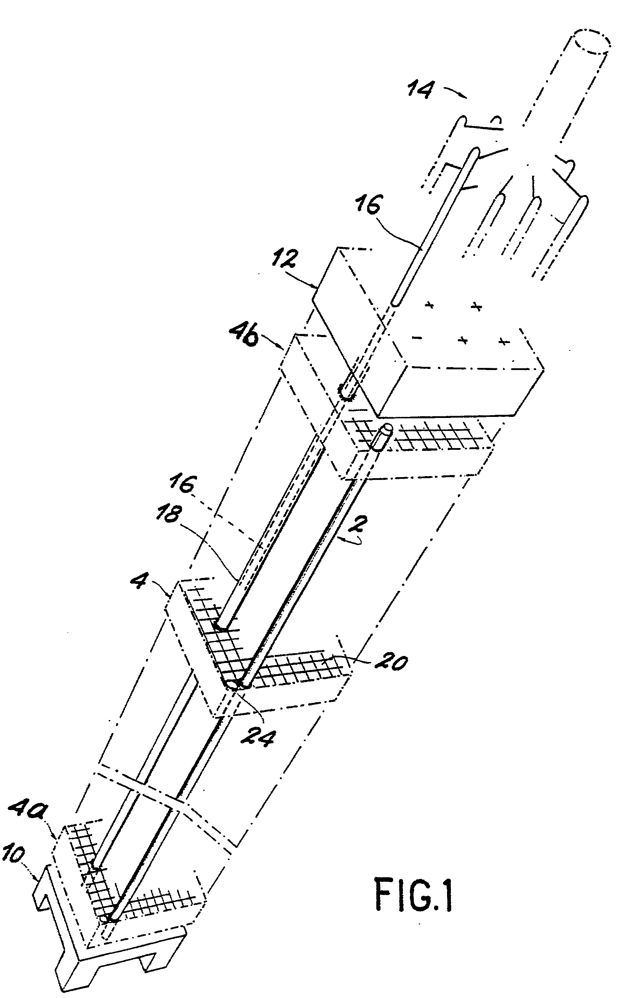

Dans un assemblage combustible les crayons combustibles sont disposés en faisceau comme l'illustre la figure 1.

Les crayons combustibles 2 sont rangés selon un réseau régulier dans des grilles 4, 4a, 4b. Deux plaques dites plaque d'extrémité inférieure 10 et plaque d'extrémité supérieure 12 sont disposées de part et d'autre des extrémités des crayons. Un dispositif appelé "araignée" 14 supporte des crayons absorbants 16 qui sont plus ou moins enfilés dans des tubes guides 18 afin de contrôler le régime du réacteur. Ces tubes guides 18 sont disposés à la place de quelques crayons combustibles.

Les grilles 4, 4a, 4b ou dispositifs d'espacement doivent remplir plusieurs fonctions :

- le rangement des crayons combustibles selon un réseau précis et régulier, assurant entre chaque crayon une lame d'eau d'épaisseur déterminée pour exercer ses deux rôles de modérateur neutronique et de réfrigérant ;
- le maintien des crayons combustibles pour éviter des vibrations ;
- le support axial des crayons combustibles à leurs extrémités ;
- une résistance mécanique suffisante et un maintien du réseau en cas d'impacts transversaux entre assemblages résultant par exemple d'un séisme ;
- une résistance hydraulique à l'écoulement du liquide réfrigérant la plus faible possible.

Habituellement, les assemblages de crayons combustibles comportent des grilles constituées d'un réseau d'alvéoles où sont ménagés des appuis rigides tels que des bossettes, et des appuis élastiques tels que des ressorts exerçant un effort opposé auxdites bossettes. Un tel assemblage est décrit dans le brevet français n° 2 168 059.

Ce type d'assemblage demande des grilles suffisamment épaisses pour que la résistance mécanique et la rigidité soient suffisantes et ceci entraîne une résistance hydraulique élevée. D'autre part, les contacts entre la grille et les crayons combustibles sont relativement localisés. Le guidage des crayons est donc insuffisant pour empêcher les vibrations des crayons.

Par ailleurs, le document GB-A 1 153 444 décrit une grille dont les alvéoles sont délimités par deux anneaux axialement alignés, reliés entre eux par des bandes élastiques incurvées vers les crayons.

L'invention a pour objet un dispositif d'espacement et de maintien de crayons combustibles dans un assemblage combustible de réacteur nucléaire permettant de pallier les inconvénients énoncés précédemment.

Selon l'invention, ce dispositif comprend une grille dont les parois forment des alvéoles adjacents, chacun de ces alvéoles étant prévu pour recevoir l'un des crayons combustibles, caractérisé en ce qu'un manchon cylindrique est placé dans chaque alvéole, chaque manchon comprenant deux anneaux prévus pour recevoir et centrer le crayon combustible correspondant, et au moins trois bandes élastiques reliant lesdits anneaux, régulièrement répartis autour d'un axe commun à ces derniers et incurvées vers le crayon correspondant, lesdits anneaux étant fixés à au moins une paroi de l'alvéole et centrés dans cette dernière par un moyen de fixation correspondant, de telle manière que lesdits manchons soient espacés l'un par rapport à l'autre et forment un réseau maillé.

Les moyens de fixation des manchons sur la structure peuvent notamment comporter des languettes rectangulaires fixées d'une part sur les anneaux et fixées d'autre part aux parois des alvéoles.

Selon une première variante de ce mode de réalisation de l'invention, les moyens de fixation entre alvéoles et de fixation des manchons sur la structure comportent des pièces en forme de U fixées par leurs extrémités à deux manchons adjacents et venant chevaucher les parois des alvéoles contenant ces manchons adjacents, lesdites pièces étant fixées sur ces parois.

Selon une seconde variante du mode préféré de réalisation de l'invention, les moyens de fixation des manchons sur la structure comportent des pièces de liaison comprenant des languettes fixées sur les anneaux de deux manchons adjacents et traversant les parois des alvéoles contenant ces manchons adjacents et une partie intermédiaire reliant lesdites languettes.

Selon une troisième variante du mode préféré de réalisation de l'invention, les moyens de fixation des manchons sur la structure comportent des languettes découpées dans chaque alvéole et rabattues vers le manchon contenu dans chaque alvéole et fixées sur les anneaux dudit manchon.

Selon une quatrième variante du mode préféré de réalisation de l'invention, les moyens de fixation des manchons sur la structure comportent des languettes découpées dans les anneaux et rabattues vers l'extérieur du manchon et fixées sur les alvéoles.

Dans certains cas, les bandes élastiques sont coupées de manière à former deux demi-manchons.

De façon avantageuse, au moins un des alvéoles comporte des fenêtres dans sa partie centrale.

Selon un autre mode de réalisation de l'invention, les fenêtres des alvéoles sont dites déflectrices et comportent des arêtes inférieures et supérieures déformées en sens opposé vers l'intérieur et l'extérieur de l'alvéole.

Selon un autre mode de réalisation de l'invention, les bandes élastiques des manchons comportent au moins une collerette faisant saillie vers l'intérieur de chaque manchon et apte à pénétrer dans une gorge d'un crayon combustible.

D'autres avantages et caractéristiques de l'invention ressortiront plus précisément de la description qui suit, donnée à titre explicatif mais nullement limitatif, en référence aux figures annexées, sur lesquelles:

– la figure 1, déjà décrite, représente en perspective une vue d'ensemble d'un assemblage combustible comportant des dispositifs selon l'invention;

– la figure 2 représente une vue en perspective d'un mode préféré de réalisation du dispositif selon l'invention;

– la figure 3 représente une vue en perspective d'une première variante des moyens de fixation des manchons sur la structure et des moyens de fixation entre alvéoles;

– la figure 4 représente une vue en perspective d'une seconde variante des moyens de fixation des manchons sur la structure;

– les figures 5a et 5b représentent une vue en perspective d'une troisième variante des moyens de fixation des manchons sur la structure;

– la figure 6 représente une vue en perspective d'une quatrième variante des moyens de fixation des manchons sur la structure;

– la figure 7 représente une vue en perspective d'un autre mode de réalisation de l'invention comportant des fenêtres déflectrices;

– la figure 8 représente une vue en perspective d'un autre mode de réalisation de l'invention illustrant la fixation des extrémités des crayons combustibles ; et

– la figure 9 représente une vue en perspective de deux demi-manchons.

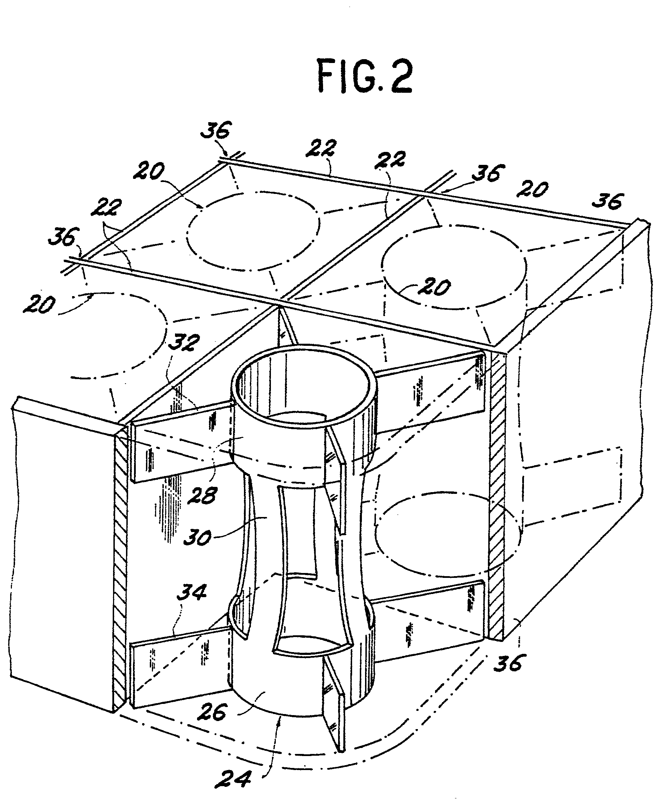

Sur la figure 2, un mode préféré de réalisation d'un dispositif d'espacement et de maintien de crayons combustibles appelé grille 4 est représenté.

Le dispositif comprend une structure d'espacement constituée d'alvéoles carrés 20 disposés selon un réseau maillé. Les alvéoles sont obtenus de façon classique par des plaquettes 22 entrecroisées. Chaque alvéole contient soit un tube guide 18 (voir figure 1), soit un manchon 24 cylindrique destiné à assurer le positionnement et le maintien d'un crayon combustible 2. Chaque manchon 24 est constitué, à ses extrémités, de deux anneaux 26, 28 reliés par des bandes élastiques 30 par exemple au nombre de quatre, incurvées vers l'intérieur du manchon 24. Les bandes et les anneaux forment une seule et même pièce.

Les deux anneaux 26, 28 assurent le centrage du crayon combustible 2 (figure 1) dans le manchon 24. Les bandes élastiques 30 exercent un serrage sur le crayon combustible 2 et permettent ainsi son maintien transversal et l'amortissement des vibrations.

Chaque manchon 24 est centré dans l'alvéole 20 correspondant par des languettes 32, 34 de centrage soudées aux coins de l'alvéole 20 et sur chaque anneau 26, 28. Les languettes 32, par exemple au nombre de quatre, sont soudées radialement à l'anneau 28. Il en est de même pour les quatre languettes 34 qui sont soudées radialement à l'anneau 26.

Le dispositif selon l'invention se distingue des réalisations habituelles en ce que l'espacement et le maintien des crayons combustibles ne sont pas assurés par des appuis rigides et élastiques disposés en vis-à-vis, mais par des guidages rigides (les anneaux 26, 28) et des lames élastiques (les bandes 30) situées tout autour des crayons. Les anneaux 26, 28 assurent le centrage des crayons et les bandes élastiques 30 permettent le maintien longitudinal de ces crayons par l'effort de serrage qu'elles exercent sur lesdits crayons.

De plus la présence des manchons 24 dans les alvéoles 20 de la grille associée aux languettes de centrage 32, 34, confère aux dispositifs ou grilles une rigidité nettement accrue par rapport aux grilles constituées seulement de plaquettes entrecroisées 22 sans manchons 24.

On peut donc par ce dispositif conserver la même épaisseur pour les plaquettes que celles de l'art antérieur et obtenir ainsi une meilleure résistance mécanique aux efforts transversaux (dûs à un séisme par exemple) grâce aux renforts constitués par les languettes. On peut aussi utiliser des plaquettes plus minces et donc avoir une résistance mécanique identique à celles des grilles actuelles tout en diminuant alors notablement la résistance hydraulique.

Le dispositif d'espacement et de maintien est utilisable pour des assemblages combustibles de toutes sections et de tous pas. Le choix d'un tel dispositif permet d'éviter le problème créé par le passage des tubes guides 18 (figure 1) dans un dispositif de l'art antérieur où il est nécessaire d'avoir la présence simultanée d'appuis rigides et d'appuis élastiques.

L'assemblage de la grille selon l'invention peut s'effectuer de la manière suivante. Les languettes 32, 34 sont soudées sur les manchons 24. Les plaquettes 22 sont montées en un réseau d'alvéoles 20 carrées. Les manchons 24 sont introduits dans ces alvéoles et des points de soudure sont réalisés aux intersections 36 du réseau solidarisant ainsi en même temps les plaquettes et les languettes. Les soudures sont par exemple effectuées par laser ou faisceau d'électrons.

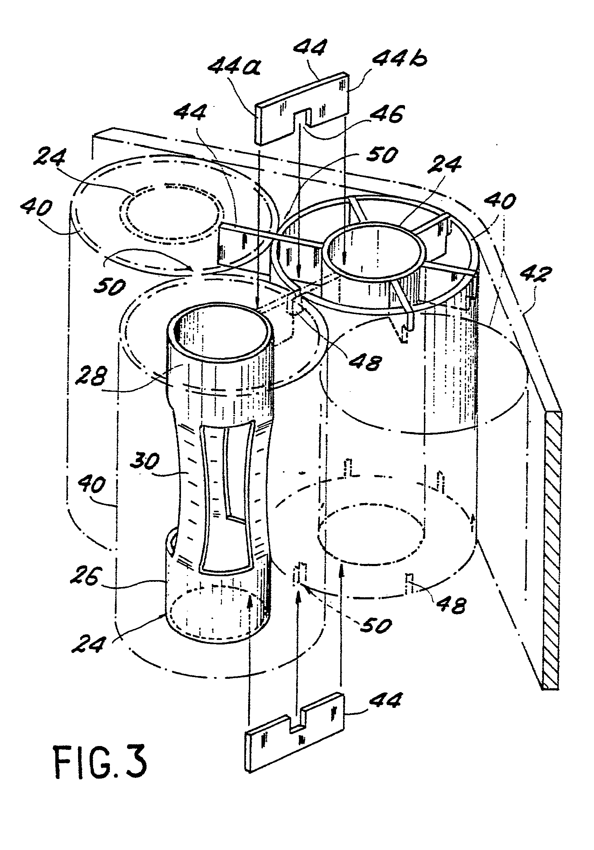

La figure 2 décrit des grilles selon l'invention où le réseau maillé présente un pas carré. On peut aussi envisager, par exemple, des alvéoles cylindriques disposés selon un réseau à pas triangulaire à l'intérieur d'un cerclage fermé. Les moyens de fixation des manchons dans les alvéoles sont similaires à ceux décrits précédemment. On peut envisager de combiner les moyens de fixation des manchons sur la structure et les moyens de fixation entre alvéoles comme le représente la figure 3.

Des alvéoles cylindriques 40 sont disposés selon un réseau à pas triangulaire à l'intérieur d'un cerclage 42 fermé. Des pièces 44 en forme de U sont soudées par leurs extrémités 44a, 44b aux anneaux 26, 28 de deux manchons 24 adjacents et viennent chevaucher les parois de leurs alvéoles 40 juxtaposées contenant ces manchons 24 adjacents. Une demi-fente 46 est pratiquée sur chaque pièce 44, et vient s'emboîter dans une demi-fente 48 correspondante pratiquée dans la paroi desdits alvéoles 40.

Ces pièces 44 sont par exemple au nombre de 6 par alvéole. Elles réalisent d'une part la liaison entre les alvéoles juxtaposés et d'autre part le centrage et la fixation des manchons dans les alvéoles.

L'assemblage d'une telle grille peut s'effectuer de la manière suivante.

On commence par monter le réseau d'alvéoles, en disposant et soudant les pièces 44 aux points de jonction 50 entre alvéoles. Puis les manchons 24 sont glissés puis soudés aux extrémités 44a, 44b des pièces 44 au niveau de leurs anneaux 26, 28 respectifs.

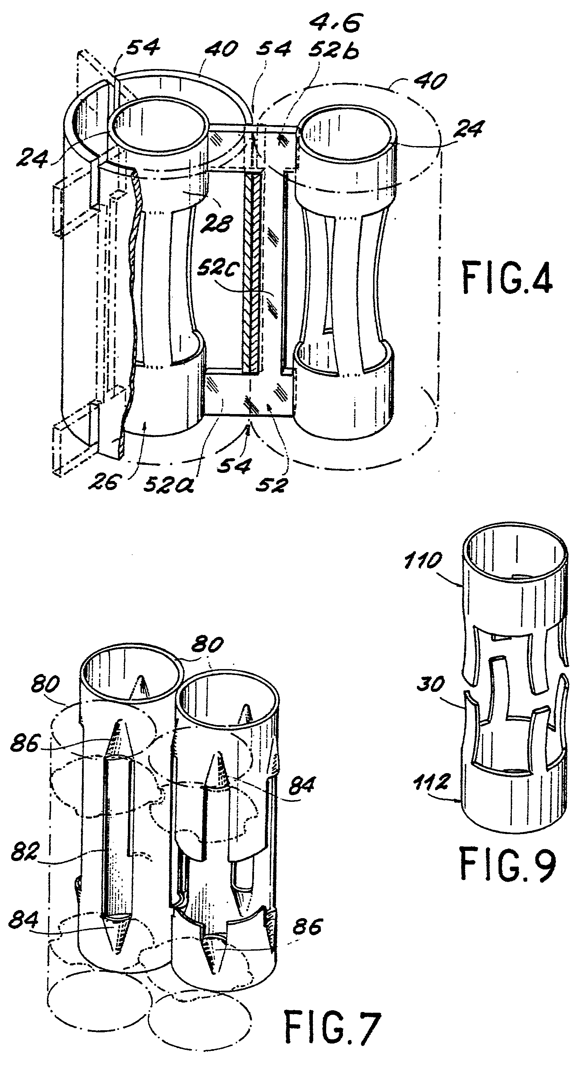

Une autre variante de réalisation des moyens de fixation des manchons 24 sur les alvéoles 40 est représentée sur la figure 4.

Deux languettes 52a, 52b sont fixées sur les anneaux 26, 28 de deux manchons 24 adjacents et s'appuient sur les parois des alvéoles 40 juxtaposées et sont soudées sur les manchons. Une partie intermédiaire 52c relie ces deux languettes 52a, 52b pour former une seule et même pièce 52.

L'assemblage peut s'effectuer de la manière suivante : on commence par monter le réseau d'alvéoles en disposant et soudant les pièces 52 aux points de jonction 54 entre alvéoles. Puis les manchons 24 sont glissés puis soudés aux extrémités des languettes 52a, 52b.

Une telle disposition permet de garantir que la pièce de liaison 52 ne peut se détacher sous l'effet du courant d'eau circulant entre les crayons à vitesse élevée ; la forme de cette pièce 52 assure qu'elle ne peut migrer et occasionner des dégâts.

Dans les modes de réalisation précédents, les moyens de fixation des manchons sur les alvéoles sont constitués par des pièces rapportées. On peut aussi envisager de découper des languettes 60 dans la paroi de l'alvéole 40, puis de les rabattre vers l'intérieur de l'alvéole comme le représentent les figures 5a et 5b.

Ces languettes sont soudées par leur extrémité sur les anneaux 26, 28 du manchon 24 contenu dans l'alvéole 40.

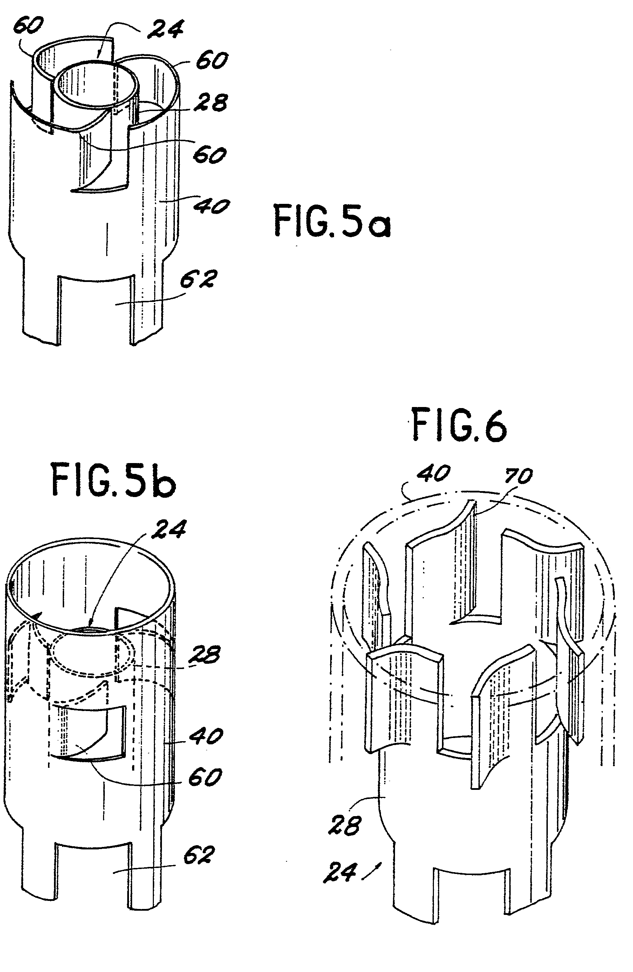

Sur la figure 6, des languettes 70 sont découpées dans les anneaux 26, 28 du manchon 24 puis rabattues vers l'extérieur du manchon afin d'être soudées à l'intérieur de la paroi de l'alvéole 40 par leur extrémité.

Dans le cas d'alvéoles carrés, les languettes seront par exemple au nombre de quatre et découpées dans le manchon.

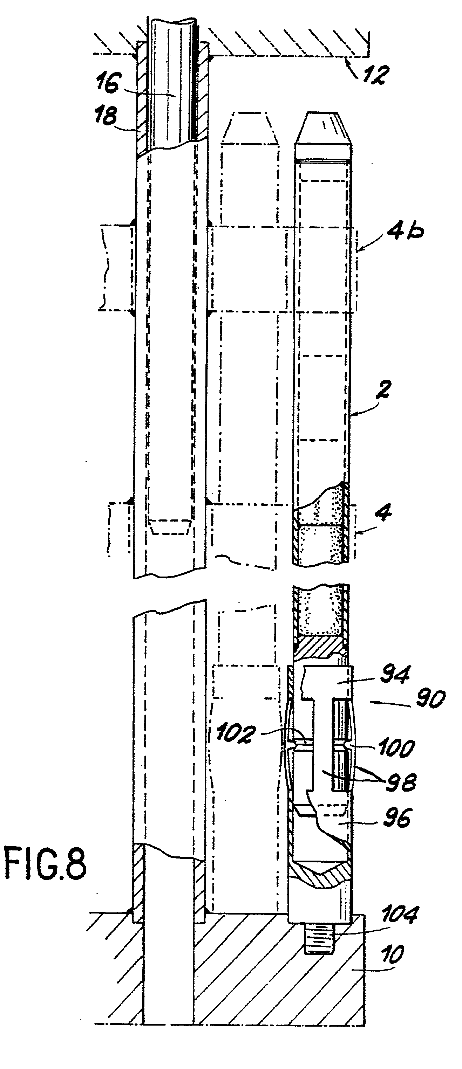

Afin de favoriser le refroidissement des éléments combustibles, il est recommandé de créer des turbulences dans le fluide réfrigérant. La déviation du courant hydraulique est réalisée au travers de fenêtres dites déflectrices 82 découpées dans la paroi des alvéoles (figure 7). On réalise sur les arêtes inférieure 84 et supérieure 86 des fenêtres, des déformations préférentiellement de forme conique en sens opposé, vers l'intérieur et l'extérieur de l'alvéole. Ces déformations réalisées sur les fenêtres en regard de deux alvéoles juxtaposés sont compatibles entre elles, c'est-à-dire que si la déformation est orientée vers l'extérieur sur l'arête d'une fenêtre, elle doit être orientée vers l'intérieur dans l'alvéole voisin. Les moyens de fixation des manchons dans les alvéoles et des alvéoles entre eux sont similaires à ceux déjà décrits.

De préférence les manchons sont constitués d'un alliage à base de zirconium du type zircaloy. Ce matériau a la particularité de présenter une relaxation totale sous irradiation. Le serrage exercé par les bandes élastiques 30 est donc susceptible de disparaître en cours de fonctionnement.

Pour assurer le maintien axial des crayons, la grille, référencée 4a sur la figure 1, disposée habituellement à proximité de la plaque d'extrémité inférieure 10 est supprimée et remplacée par des manchons 90 selon l'invention qui enserrent chaque crayon combustible 2 et sont rendus solidaires de ladite plaque 10, comme il est représenté sur la figure 8.

Chaque manchon 90 comporte deux anneaux 94, 96 reliés par des bandes élastiques 98 incurvées vers l'intérieur du manchon. Ces bandes 98 comportent une collerette 100 faisant saillie vers l'intérieur du manchon. Cette collerette 100 prend place dans une gorge 102 usinée sur l'extrémité du crayon combustible 2. L'anneau 96 situé au niveau de l'extrémité du crayon se prolonge de manière à former un bout fileté 104. Ce bout 104 est vissé dans la plaque d'extrémité inférieure 10. L'ensemble des manchons 90 vissés sur la plaque 10 assure un espacement rigide et un maintien axial efficace des crayons combustibles 2 même sous irradiation grâce à la collaboration des collerettes 100 avec les gorges 102. On a également représenté sur la figure 8 un tube guide 18 de la figure 1.

La grille 4a (figure 1) peut donc être supprimée par un tel dispositif, ce qui se traduit par un gain appréciable pour la résistance hydraulique de l'assemblage.

Bien sûr on peut envisager d'avoir plusieurs collerettes et plusieurs gorges associées pour un même assemblage manchon-crayon.

De la même manière, la grille, référencée 4b sur la figure 1, disposée habituellement à proximité de la plaque d'extrémité surérieure 12 peut être remplacée par un dispositif similaire à celui qui vient d'être décrit.

Sur la figure 9, deux demi-manchons 110 et 112 sont représentés. Pour les fabriquer, on coupe un manchon selon l'invention tel que le manchon 24 de la figure 2 au milieu des bandes élastiques 30. L'utilisation de deux demi-manchons permet de supprimer l'effort longitudinal qui apparaît dans le manchon lors de l'effacement des bandes élastiques pendant l'introduction des crayons combustibles.

Bien entendu, la description ci-dessus n'a été donnée qu'à titre d'exemple, toutes modifications dans les formes réalisation peuvent être envisagées sans modifier le principe fondamental de l'invention.

On peut par exemple découper des fenêtres dans les parois des alvéoles sans qu'elles soient déflectrices. Sur les figures 5a, 5b, des fenêtres 62 rectangulaires sont ainsi découpées dans la partie centrale des alvéoles 40.

## Revendications

1. Dispositif d'espacement et de maintien de crayons combustibles dans un assemblage combustible, ce dispositif comprenant une grille (4) dont les parois (22) forment des alvéoles adjacents (20), chacun de ces alvéoles étant prévu pour recevoir l'un des crayons combustibles, caractérisé en ce qu'un manchon cylindrique (24) est placé dans chaque alvéole (20), chaque manchon comprenant deux anneaux (26, 28) prévus pour recevoir et centrer le crayon combustible correspondant, et au moins trois bandes élastiques (30) reliant lesdits anneaux, régulièrement réparties autour d'un axe commun à ces derniers et incurvées vers le crayon correspondant, lesdits anneaux étant fixés à au moins une paroi de l'alvéole et centrés dans cette dernière par des moyens de fixation correspondant, de telle manière que lesdits manchons (24) soient espacés l'un par rapport à l'autre et forment un réseau maillé.

2. Dispositif d'espacement et de maintien de crayons combustibles selon la revendication 1, caractérisé en ce que les moyens de fixation comportent des languettes (32, 34) rectangulaires fixées d'une part sur les anneaux et d'autre part aux parois des alvéoles (20).

3. Dispositif d'espacement et de maintien de crayons combustibles selon la revendication 1, caractérisé en ce que les moyens de fixation comportent des pièces (44) en forme de U fixées par leurs extrémités (44a, 44b) à deux manchons (24) adjacents et venant chevaucher les parois des alvéoles (40) contenant ces manchons (24) adjacents, lesdites pièces (44) étant fixées sur ces parois.

4. Dispositif d'espacement et de maintien de crayons combustibles selon la revendication 1, caractérisé en ce que les moyens de fixation comportent des pièces de liaison (52) comprenant chacune deux languettes (52a, 52b) fixées sur les anneaux (26, 28) de deux manchons (24) adjacents et traversant les parois des alvéoles (40) contenant ces manchons (24) adjacents, chacune des pièces de liaison comprenant de plus une partie intermédiaire (52c) reliant lesdites languettes (52a, 52b).

5. Dispositif d'espacement et de maintien de crayons combustibles selon la revendication 1, caractérisé en ce que les moyens de fixation comportent des languettes (60) découpées dans les parois des alvéoles (40), rabattues vers le manchon (24) contenu dans chaque alvéole (40) et fixées sur les anneaux (26, 28) dudit manchon (24).

6. Dispositif d'espacement et de maintien de crayons combustibles selon la revendication 1, caractérisé en ce que les moyens de fixation comportent des languettes (70) découpées dans les anneaux (26, 28), rabattues vers l'extérieur du manchon (24) et fixées sur les parois des alvéoles (40).

7. Dispositif d'espacement et de maintien de crayons combustibles selon l'une quelconque des revendications 1 à 6, caractérisé en ce que les bandes élastiques (30) sont coupées de manière à former deux demi-manchons (110, 112).

8. Dispositif d'espacement et de maintien de crayons combustibles selon l'une quelconque des revendications 1 à 7, caractérisé en ce qu'au moins une des parois des alvéoles (20, 40, 80) comporte des fenêtres (62, 82) dans sa partie centrale.

9. Dispositif d'espacement et de maintien de crayons combustibles selon la revendication 8, caractérisé en ce que les fenêtres (82) comportent des arêtes inférieures (84) et supérieures (86) déformées en sens opposé vers l'intérieur et l'extérieur de l'alvéole (80).

10. Dispositif d'espacement et de maintien de crayons combustibles selon la revendication 1, caractérisé en ce que chaque bande élastique (30, 98) comporte au moins une collerette (100) faisant saillie vers l'intérieur de chaque manchon et apte à pénétrer dans une gorge (100) d'un crayon combustible.

**Patentansprüche**

1. Abstands- und Haltevorrichtung für Brennstäbe in einem Brennstoffbündel, umfassend ein Gitter (4), dessen Wände (22) benachbarte Zellen (20) bilden, wobei jede dieser Zellen dazu vorgesehen ist, einen der Brennstäbe aufzunehmen, dadurch gekennzeichnet, daß sich in jeder Zelle (20) eine zylindrische Manschette (24) befindet, die zwei Ringe (26, 28) zur Aufnahme und zum Zentrieren des entsprechenden Brennstabes und wenigstens drei elastische Bänder (30) umfaßt, die die genannten Ringe miteinander verbinden, regelmäßig um eine den letzteren gemeinsame Achse verteilt angeordnet und gegen den entsprechenden Brennstab gebogen sind, wobei die genannten Ringe an wenigstens einer Wand der Zelle befestigt und in dieser durch entsprechende Befestigungseinrichtungen zentriert sind, damit die genannten Manschetten (24) voneinander Abstand haben und ein Maschennetz bilden.

2. Abstands- und Haltevorrichtung für Brennstäbe nach Anspruch 1, dadurch gekennzeichnet, daß die Befestigungseinrichtungen rechteckige Zungen (32, 34) sind, die einerseits an den Ringen und andererseits an den Wänden der Zellen (20) befestigt sind.

3. Abstands- und Haltevorrichtung für Brennstäbe nach Anspruch 1, dadurch gekennzeichnet, daß die Befestigungseinrichtungen U-förmige Teile (44) umfassen, die durch ihre Enden (44a, 44b) an zwei benachbarten Manschetten (24) befestigt sind und die Wände von Zellen (40) übergreifen, die diese benachbarten Manschetten (24) enthalten, wobei die genannten Teile (44) auf diesen Wänden befestigt sind.

4. Abstands- und Haltevorrichtung für Brennstäbe nach Anspruch 1, dadurch gekennzeichnet, daß die Befestigungseinrichtungen Verbindungsteile (52) umfassen, die jeweils zwei Zungen (52a, 52b) aufweisen, die auf den Ringen (26, 28) von zwei benachbarten Manschetten (24) befestigt sind und die Wände der Zellen (40) durchqueren, die diese benachbarten Manschetten (24) enthalten, wobei jedes der Verbindungsteile darüber hinaus einen Zwischenabschnitt (52c) aufweist, der die genannten Zungen (52a, 52b) miteinander verbindet.

5. Abstands- und Haltevorrichtung für Brennstäbe nach Anspruch 1, dadurch gekennzeichnet, daß die Befestigungseinrichtungen Zungen (60) enthalten, die in die Wände der Zellen (40) geschnitten sind, gegen die in jeder Zelle (40) enthaltene Manschette (24) gebogen und an den Ringen (26, 28) der genannten Manschette (24) befestigt sind.

6. Abstands- und Haltevorrichtung für Brennstäbe nach Anspruch 1, dadurch gekennzeichnet, daß die Befestigungseinrichtungen Zungen (70) enthalten, die in die Ringe (26, 28) geschnitten sind, von der Manschette (24) nach außen gebogen und an den Wänden der Zellen (40) befestigt sind.

7. Abstands- und Haltevorrichtung für Brennstäbe nach einem der Ansprüche 1 bis 6, dadurch gekennzeichnet, daß die elastischen Bänder (30) derart geschnitten sind, daß sie zwei Halbmanschetten (110, 112) bilden.

8. Abstands- und Haltevorrichtung für Brennstäbe nach einem der Ansprüche 1 bis 7, dadurch gekennzeichnet, daß wenigstens eine der Wände der Zellen (20, 40, 80) Fenster (62, 82) in ihrem mittleren Abschnitt enthält.

9. Abstands- und Haltevorrichtung für Brennstäbe nach Anspruch 8, dadurch gekennzeichnet, daß die Fenster (82) untere (84) und obere (86) Anschläge aufweisen, die in einander entgegengesetztem Sinn gegen den Innenraum der Zelle (80) und davon nach außen ausgeformt sind.

10. Abstands- und Haltevorrichtung für Brennstäbe nach Anspruch 1, dadurch gekennzeichnet, daß jedes elastische Band (30, 98) wenigstens einen Kragen (100) aufweist, der gegen den Innenraum jeder Manschette vorsteht und dazu eingerichtet ist, in eine Kehle (100) eines Brennstabes einzutreten.

## Claims

1. Device for spacing and holding in place fuel rods in a fuel assembly, said device incorporating a grid (4), whose walls (22) form adjacent recesses (20), each of said recesses serving to receive one of the fuel rods, characterized in that a cylindrical sleeve (24) is placed in each recess (20), each sleeve having two rings (26, 28) for receiving and centring the corresponding fuel rod, and at least three elastic strips (30) connecting said rings, regularly distributed about an axis common to the latter and curved inwards towards the corresponding rod, said rings being fixed to at least one wall of the recess and centred in the latter by corresponding fixing means, in such a way that said sleeves (24) are reciprocally spaced and form a mesh network.

2. Device for spacing and holding fuel rods according to claim 1, characterized in that the fixing means incorporate rectangular tongues (32, 33) fixed on the one hand to the rings and on the other to the walls of recesses (20).

3. Device for spacing and holding in place fuel rods according to claim 1, characterized in that the fixing means incorporate U-shaped members (44) fixed by their ends (44a, 44b) to two adjacent sleeves (24) and which overlap the walls of the recesses (40) containing the adjacent sleeves (24), said members (44) being fixed to said walls.

4. Device for spacing and holding in place fuel rods according to claim 1, characterized in that the fixing means incorporate connecting members (52), each having two tongues (52a, 52b) fixed to rings (26, 28) of two adjacent sleeves (24) and traversing the walls of recesses (40) containing said adjacent sleeve (24), each of the connecting members also having an intermediate portion (52c) linking said tongues (52a, 52b).

5. Device for spacing and holding in place fuel rods according to claim 1, characterized in that the fixing means incorporate tongues (60) cut from the walls of the recesses (40) and turned down towards the sleeve (24) contained in each recess (40) and fixed to rings (26, 28) of said sleeve (24).

6. Device for spacing and holding in place fuel rods according to claim 1, characterized in that the fixing means incorporate tongues (70) cut from the rings (26, 28), turned down towards the outside of sleeve (24) and fixed to the walls of recesses (40).

7. Device for spacing and holding in place fuel rods according to any one of the claims 1 to 6, characterized in that the elastic strips (30) are cut so as to form two halfsleeves (110, 112).

8. Device for spacing and holding in place fuel rods according to any one of the claims 1 to 7, characterized in that at least one of the walls of recesses (20, 40, 80) has windows (62, 82) in its central portion.

9. Device for spacing and holding in place fuel rods according to claim 8, characterized in that the windows (82) have lower (84) and upper (86) edges deformed in opposite senses inwards and outwards of the recess (80).

10. Device for spacing and holding in place fuel rods according to claim 1, characterized in that each elastic strip (30, 98) has at least one collar (100) projecting towards the inside of each sleeve and able to penetrate a groove (100) of a fuel rod.

FIG.1

# FIG.2

FIG.3

4.6

**FIG.4**

54 40 54 52b 40

24 24

28

52c

26 52a 54 52

**FIG.7**

80

80

86

82

84

84 86

110

30

112

**FIG.9**

FIG.5a

FIG.6

FIG.5b

FIG.8